# EUROPÄISCHE PATENTANMELDUNG

(11) **EP 4 241 630 A1**
(43) Veröffentlichungstag der Anmeldung: **13.09.2023**
(21) Anmeldenummer: 22160523.1
(22) Anmeldetag: 07.03.2022
(51) Int. Cl.: A47J 36/32, A47J 43/07, A47J 43/06

(54) **KÜCHENMASCHINE, ZUBEHÖRTEIL FÜR EINE KÜCHENMASCHINE, SYSTEM UND VERFAHREN ZUM BETREIBEN EINER KÜCHENMASCHINE**

(71) Anmelder: Vorwerk & Co. Interholding GmbH, 42275 Wuppertal (DE)
(72) Erfinder: Beckmann, Nils, 42853 Remscheid (DE); Schmitz, Kevin, 42781 Haan-Gruiten (DE); Sernecki, Miron, 58097 Hagen (DE)
(74) Vertreter: Cohausz & Florack

(57) **Zusammenfassung**

Die Erfindung betrifft eine Küchenmaschine (2, 202, 300) mit einem ein Gehäuse (8, 212), einen Elektromotor (10, 214), eine Erfassungseinrichtung (12, 216), eine Steuereinrichtung (14, 218) und eine Kommunikationsschnittstelle (16, 220, 308) aufweisenden Grundgerät (4, 206, 302) und mit mindestens einem ein Identifikationsmerkmal aufweisenden Zubehörteil (6, 208, 210, 304, 306, 400). Die Steuereinrichtung (14, 218) ist dazu eingerichtet, auf Basis eines erfassten Identifikationsmerkmals ein Zubehörteil (6, 208, 210, 304, 306, 400) zu erkennen und entsprechende Kochinformationen anzuzeigen und auch bei dem ersten Einsatz dieses Zubehörteils (6, 208, 210, 304, 306, 400) es dann in einer Datenbank (24, 204) automatisch zu registrieren. Beschrieben sind auch ein System (200) mit einer Küchenmaschine (2, 202, 300) und mit einer Datenbank (204), ein Zubehörteil (6, 208, 210, 304, 306, 400) mit einem integrierten Datenträger (222, 224, 404), ein Betriebsverfahren und ein Computerprogramm.

## Beschreibung

Die Erfindung betrifft eine Küchenmaschine mit einem ein Gehäuse, einen Elektromotor, eine Erfassungseinrichtung, eine Steuereinrichtung und eine Kommunikationsschnittstelle aufweisenden Grundgerät und mit mindestens einem ein Identifikationsmerkmal aufweisenden Zubehörteil. Auch beschrieben sind ein Zubehörteil, ein System und ein Verfahren zum Betreiben einer solchen Küchenmaschine sowie ein entsprechendes Computerprogramm.

Elektrisch betriebene Küchenmaschinen sind bereits bekannt, insbesondere zum Verarbeiten von rohen oder halbfertigen Lebensmittelprodukten. Oft weisen solche Küchenmaschinen ein Grundgerät auf, mit dem separate Funktionsteile zusammenwirken, um je nach erzieltem Gericht, Getränk oder ähnliches ein Lebensmittel zu verarbeiten. Diese Funktionsteile werden in der Regel durch Küchenmaschinenanbieter als Zubehörteile verkauft, zum Beispiel als Kochgefäß, Messer- oder Rühreinheit.

Um die Herstellungskosten dieser Zubehörteile gering zu halten und somit auch die Rentabilität des Zubehörgeschäfts zu steigern, soll das Grundgerät vielseitig einsetzbar sein und möglichst viele der kostenintensiveren Komponenten aufweisen, wie zum Beispiel den Elektromotor für den Antrieb der beweglichen Teile der Zubehörteile oder eine Steuereinrichtung. Eine derartige Gestaltung ermöglicht allerdings Wettbewerber, mit dem kostenintensiven Grundgerät kompatible, in der Herstellung günstige Zubehörteile anzubieten. Diese Problematik wurde bereits in der Vergangenheit zumindest teilweise durch Anbringen eines fluoreszierenden Farbstoffs am Zubehörteil gelöst, dessen Pigmente eine entsprechende Erfassungs- und Verarbeitungsausstattung am Grundgerät als "zulässig" erkennen. Diese Lösung wird in der Druckschrift DE 10 2013 111 472 A1 ausführlich erläutert. Sollte ein Zubehörteil keinen solchen Farbstoff aufweisen, wird dann eine Funktion der Küchenmaschine gesperrt bzw. unterbunden, und so auch die Küchenmaschine beim Einsatz eines Imitats ohne die besonderen Pigmente nicht nutzbar.

Daneben ist die Benutzerfreundlichkeit einer Küchenmaschine ein wichtiges Verkaufsargument. So sind Küchenmaschinen bekannt, die ein digitales, unterstütztes Kochen anbieten. Zum Beispiel offenbart die Druckschrift WO 2018/201653 A1 eine Küchenmaschine, die den Typ eines Zubehörteils erkennt und dem Nutzer passende Kochinformationen vorschlägt.

Die bekannten Küchenmaschinen haben allerdings den Nachteil, dass bei jeder Nutzung und trotz automatischer Erfassung des Zubehörteiltyps, zahlreiche Nutzereingaben gefragt sind, bis passende Kochinformationen tatsächlich zur Verfügung gestellt werden. So soll in der Regel das Zubehörteil durch aufwändige Eingabe eines Registrierungscodes in ein Nutzerportal registriert und bei jedem Einsatz Kochrezepte händisch ausgewählt werden.

Der vorliegenden Erfindung liegt daher die technische Aufgabe zu Grunde, die Nutzerfreundlichkeit von Küchenmaschinen zu steigern und gleichzeitig den Einsatz von originalen Zubehörteilen zu fördern.

Diese Aufgabe wird durch eine Küchenmaschine mit einem ein Gehäuse, einen Elektromotor, eine Erfassungseinrichtung, eine Steuereinrichtung und eine Kommunikationsschnittstelle aufweisenden Grundgerät und mit mindestens einem ein Identifikationsmerkmal aufweisenden Zubehörteil gelöst, die dadurch gekennzeichnet ist, dass die Erfassungseinrichtung dazu eingerichtet ist, das Identifikationsmerkmal des mindestens einen Zubehörteils zu erfassen und an die Steuereinrichtung weiterzuleiten, dass die Steuereinrichtung dazu eingerichtet ist, das erfasste Identifikationsmerkmal mit Identifikationsmerkmalen aus einer Datenbank zu vergleichen, dass die Steuereinrichtung dazu eingerichtet ist, bei Übereinstimmung des erfassten Identifikationsmerkmals mit einem unvermerkten Identifikationsmerkmal aus der Datenbank das übereinstimmende Identifikationsmerkmal aus der Datenbank als bekannt zu vermerken und Kochinformationen, die dem übereinstimmenden Identifikationsmerkmal aus der Datenbank zugeordnet sind, über die Kommunikationsschnittstelle zur Verfügung zu stellen, und dass die Steuereinrichtung dazu eingerichtet ist, bei Übereinstimmung des erfassten Identifikationsmerkmals mit einem bereits als bekannt vermerkten Identifikationsmerkmal aus der Datenbank mindestens eine dem als bekannt vermerkten Identifikationsmerkmal zugeordnete Kochinformation über die Kommunikationsschnittstelle zur Verfügung zu stellen.

Eine erfindungsgemäße Küchenmaschine ermöglicht eine automatische Registrierung eines erfassten Zubehörteils und hierzu passende Kochinformationen anzuzeigen. Sollte das Zubehörteil bereits mindestens einmal erfasst und somit auch bereits registriert worden sein, dann können durch die beschriebene Küchenmaschine passende Kochinformationen direkt und unter minimiertem Nutzeraufwand zur Verfügung gestellt werden. Insbesondere wird durch die Wiedererkennung eines Zubehörteils die Bedienung der Küchenmaschine schneller und intuitiver für den Nutzer. Insgesamt bietet die Küchenmaschine eine gesteigerte Nutzerfreundlichkeit, die nur beim Einsatz von Zubehörteilen mit den entsprechenden Herstellermerkmalen zugänglich ist.

Ein Grundgerät im Sinne der vorliegenden Erfindung ist vorzugsweise als Basis für den Einsatz von Zubehörteilen ausgestaltet, indem es eine Schnittstelle für ein Zusammenwirken mit mindestens einem Zubehörteil aufweist. Das Grundgerät weist ein Gehäuse auf, in dem ein Elektromotor zum Antrieb von Zubehörteilen angeordnet ist. Der Elektromotor wirkt mit einem am Grundgerät eingesetzten Zubehörteil über die Schnittstelle des Grundgeräts zusammen.

Als Zubehörteil wird jedes für ein Zusammenwirken mit dem Grundgerät ausgebildetes Teil verstanden. Das Zubehörteil kann mittelbar oder unmittelbar am Grundgerät einsetzbar sein, wobei für ein unmittelbares Einsetzen das Zubehörteil eine mit der Schnittstelle des Grundgeräts kompatible Schnittstelle aufweist, und wobei für ein unmittelbares Einsetzen das Zubehörteil an einem weiteren Zubehörteil angesetzt ist, das wiederum unmittelbar am Grundgerät eingesetzt ist. Der Begriff "Einsetzen" umfasst, unter anderem, die Handlungen aus der Liste: Verbinden, Koppeln, Montieren, Aufsetzen, Anbringen, Aufbringen und Ähnliches. Insbesondere ist ein Zubehörteil zur Erweiterung der Funktion des Grundgeräts ausgebildet, zum Beispiel als Schneide-, Rühr-, Koch-, Wiege-, Gar-, Dampf- oder Abdeckungseinheit. Die Funktion, für die das Zubehörteil vorgesehen ist, bezeichnet vorzugsweise den Zubehörteiltyp.

Der Begriff Identifikationsmerkmal umfasst jede Information über mindestens eine Eigenschaft des Zubehörteils. Vorzugsweise reicht das Identifikationsmerkmal aus, um ein Zubehörteil zu identifizieren bzw. im Kontext einer Datenbank mit mehreren Kochinformationen zuordnen zu können. Ein Identifikationsmerkmal im Sinne der Erfindung kann aus der nicht abschließenden Liste ausgewählt sein: Zubehörteiltyp, wie zum Beispiel Schneide-, Rühr-, Koch-, Wiege-, Gar-, Dampf- oder Abdeckungseinheit; Herkunftsinformation, wie Herstelleridentität, Herstellungszeitpunkt, Herstellungsort; Authentifizierungsinformation; Identifikationsnummer, wie zum Beispiel eine Seriennummer oder einen Universally Unique Identifier (UUID). Vorzugsweise ist das Identifikationsmerkmal durch den Zubehörteilhersteller vor Vertrieb vergeben worden.

Das Informationsmerkmal ist vorzugsweise auf einem Datenträger gespeichert, der in dem Grundkörper des Zubehörteils integriert oder am Grundkörper des Zubehörteils dauerhaft angebracht ist. Es können mehrere Datenträger vorgesehen sein, die jeweils ein Identifikationsmerkmal tragen, und die an unterschiedlichen Positionen am Zubehörteil angeordnet sind. So kann je nach Einsatzposition bzw. Richtung, in der das Zubehörteil am Grundgerät eingesetzt ist, ein der Einsatzposition entsprechendes Identifikationsmerkmal erfasst werden. Alternativ oder zusätzlich kann ein Datenträger mehrere Identifikationsmerkmale aufweisen, die jeweils in Abhängigkeit von der Einsatzposition des Zubehörteils am Grundkörper erfasst werden.

Insbesondere kann ein Datenträger umschaltbar, zum Beispiel mithilfe eines Magnets, sein und in Abhängigkeit von der Schaltposition bzw. von dem Schaltzustand ein entsprechendes Identifikationsmerkmal zur Erfassung bereitstellen. Somit kann für ein Zubehörteil, das mehrere Einsatzpositionen am Grundgerät annehmen kann, ein passender Schnellstartmodus in Abhängigkeit von seiner aktuellen Einsatzposition automatisch aufgerufen werden.

Die Erfassungseinrichtung am Grundgerät ist dazu eingerichtet, das Identifikationsmerkmal des Zubehörteils zu erfassen. Ist zum Beispiel das Identifikationsmerkmal in Form eines QR-Codes gespeichert, so ist die Erfassungseinrichtung vorzugsweise als optischer Leser ausgebildet. Die Erfassungseinrichtung kann auch ein Leser für einen an eine RFID-Antenne verbundenen Datenspeicher, ein Teil eines Nachfunk-Systems (z.B. Bluetooth, Ultra-Wide-Band (UWB) oder WLAN) oder ein Teil eines Bussystems sein.

Darüber hinaus kann die Erfassungseinrichtung am Grundgerät über eine Kommunikationsverbindung mit einem separaten Gerät verbindbar sein, wobei das separate Gerät dazu eingerichtet ist, ein Identifikationsmerkmal zu erfassen und an die Erfassungseinrichtung am Grundgerät weiterzuleiten. In diesem Fall kann das separate Gerät ein Smartphone sein, das zum Erfassen von Informationen aus einem am Zubehörteil angebrachten QR-Code mit einem Identifikationsmerkmal eingerichtet ist.

Außerdem kann die Erfassungseinrichtung über eine Kommunikationsverbindung mit einem Erfassungselement verbindbar sein, das an einem ersten Zubehörteil angeordnet ist. Das Erfassungselement ist vorzugsweise dazu eingerichtet, ein Identifikationsmerkmal eines weiteren Zubehörteils zu erfassen. Auf diese Art kann das weitere Zubehörteil erst erkannt und dann für eine bestimmungsgemäße Benutzung am Grundgerät oder am ersten Zubehörteil eingesetzt werden. Dies ist für Zubehörteile, deren Identifikationsmerkmal sich in der bestimmungsgemäßen Einsatzposition nur schwierig erfassen lässt, insbesondere aufgrund einer zu niedrigen Signalübermittlung durch den Boden eines als Kocheinheit ausgebildeten ersten Zubehörteils, besonders vorteilhaft.

Weiterhin ist eine Steuereinrichtung in dem Gehäuse oder am Gehäuse des Grundgeräts angeordnet, die vorzugsweise einen Prozessor mit einem Speichermedium aufweist. Insbesondere kann ein Computerprogramm mit Befehlen auf dem Speichermedium gespeichert sein, deren Ausführung durch den Prozessor die Durchführung eines Betriebsverfahrens durch die Küchenmaschine bewirkt. Auf dem Speichermedium kann eine Datenbank mit Kochinformationen und Identifikationsmerkmalen gespeichert sein.

Vorzugsweise ist auf dem Speichermedium der Steuereinrichtung eine derartige Datenbank hinterlegt, dass im Betrieb auf einen Zugriff auf eine externe Informationsquelle bzw. auf eine externe Datenbank verzichtet werden kann. Die Küchenmaschine, insbesondere die Steuereinrichtung, kann derart eingerichtet sein, dass die Steuereinrichtung auf eine externe Datenbank zugreift, wenn die in der Datenbank auf dem Speichermedium der Datenbank hinterlegten Informationen nicht ausreichend sind. So kann zum Beispiel beim ersten Einsatz eines Zubehörteils die Steuereinrichtung auf eine externe Datenbank zugreifen, um Kochinformationen für dieses Zubehörteil auf ihr Speichermedium herunterzuladen.

Der Begriff Kochinformation umfasst alle Informationen, die in Zusammenhang mit der Küchenmaschine einen Vorbereitungs- oder Zubereitungsschritt betrifft. So kann eine Kochinformation ein Betriebsparameter für Funktionsteile der Küchenmaschine und / oder eine Zubereitungsanweisung für durch den Nutzer durchzuführende Schritte sein. Hierzu zählen beispielsweise eine Zutatenart, eine Zutatenmenge, ein Zutatengewicht, ein Zutatenvolumen, eine Drehzahl für den Elektromotor, eine Temperatur, ein Feuchtigkeitsgrad, eine Dauer, Angaben aus einem Kochrezept, eine Einleitung zur Erstbenutzung eines Zubehörteils am Grundgerät. Vorzugsweise ist eine Kochinformation an die Eigenschaften der Küchenmaschine und deren Bestandteile angepasst, so dass die Anwendung der Kochinformation möglichst auf den Einsatz der Küchenmaschine und deren originalen Zubehörteile begrenzt ist.

Die Steuereinrichtung ist in bevorzugter Weise mit der Kommunikationsschnittstelle durch eine bidirektionale Kommunikationsverbindung verbunden, so dass Informationen von der Steuereinrichtung an die Kommunikationsschnittstelle und auch von der Kommunikationsschnittstelle an die Steuereinrichtung ausgetauscht werden können. Weiter bevorzugt ist eine Gestaltung der Steuereinrichtung für einen drahtlosen Zugriff auf eine externe Datenbank, zum Beispiel über WLAN, WIFI, Bluetooth oder ähnliches. Alternativ oder zusätzlich kann die Steuereinrichtung für einen Zugriff auf eine Datenbank über eine drahtgebundene Schnittstelle z.B. in der Form eines USB-Ports oder eines elektronisches Bus-Systems ausgebildet sein.

Eine Kommunikationsschnittstelle kann vorliegend eine Benutzerschnittelle in Form einer akustischen, haptischen oder optischen Anzeige, aber auch eine Schnittstelle zum Weiterleiten von Informationen an ein Nutzerendgerät wie zum Beispiel ein Smartphone oder ein digitales Hausverwaltungssystem sein. So stellt die Kommunikationsschnittstelle Informationen unmittelbar, das heißt zum Beispiel selbst als Display, oder mittelbar über eine zusätzliche Nutzerschnittstelle zur Verfügung.

Die Steuereinrichtung ist dazu eingerichtet, das erfasste Identifikationsmerkmal mit Identifikationsmerkmalen aus einer Datenbank zu vergleichen. Hierbei weist die Datenbank mindesten ein Identifikationsmerkmal auf, dem zutreffende Kochinformationen zugordnet sind. Vorzugsweise ist die Datenbank auf dem Speichermedium der Steuereinrichtung hinterlegt. Alternativ oder zusätzlich kann die Datenbank eine externe Datenbank sein. Zutreffend sind Kochinformationen, die die Ausführung eines Zubereitungsschrittes mithilfe des das Identifikationsmerkmal tragenden Zubehörteils betreffen. So ist zum Beispiel ein Kochrezept für Kartoffelpüree eine zutreffende Kochinformation für ein Zubehörteil mit einem dem Zubehörteiltyp "Rühreinheit" entsprechenden Identifikationsmerkmal.

Eine Kochinformation kann einem Identifikationsmerkmal durch den Küchenmaschinenhersteller vor Verkauf der Küchenmaschine zugeordnet sein und / oder durch ein Softwareupdate nachträglich zugeordnet sein. Die Zuordnung von Kochinformationen kann auch in Zusammenhang mit dem Kauf eines Zubehörteil erfolgen, in dem Kochinformationen in der Datenbank freigeschaltet bzw. zugänglich gemacht werden, wenn ein passendes Zubehörteil erworben worden ist. Alternativ oder zusätzlich können Kochinformationen Identifikationsmerkmale zugeordnet werden oder freigeschaltet werden, wenn ein Dienstleistungsangebot angenommen worden ist, wie zum Beispiel eine Zusatzleistung auf einem mit der Datenbank verbundenen digitalen Nutzerportal. Daneben kann eine Zuordnung durch Nutzereingabe in der Datenbank hinterlegt werden.

Die Datenbank kann ein Teilbereich einer umfangreicheren Datenbank sein und unter der Bedingung einer erfolgreichen Nutzeranmeldung auf einem digitalen Nutzerportal des Anbieters der Küchenmaschine verfügbar sein.

Ergibt der durch die Steuereinrichtung durchgeführte Vergleich, dass das erfasste Identifikationsmerkmal einem Identifikationsmerkmal aus der Datenbank entspricht, also dass eine Übereinstimmung vorliegt, dann wird durch die Steuereinrichtung geprüft, ob das übereinstimmende Identifikationsmerkmal aus der Datenbank einen Vermerk trägt. Ist dies nicht der Fall, dann wird das übereinstimmende Identifikationsmerkmal aus der Datenbank als "bekannt" vermerkt und so das erfasste Identifikationsmerkmal bzw. das dazu gehörende Zubehörteil für zukünftige Einsätze registriert. In einem weiteren Schritt stellt die Steuereinrichtung die Kochinformationen, die in der Datenbank dem übereinstimmenden Identifikationsmerkmal zugeordnet sind, über die Kommunikationsschnittstelle zur Verfügung.

So wird das Zubehörteil bei einem erstmaligen Einsatz in Zusammenhang mit dem Grundgerät der Küchenmaschine automatisch registriert und auch geeignete Kochinformationen dem Nutzer automatisch zur Verfügung gestellt bzw. vorgeschlagen.

Ergibt die Prüfung, dass das übereinstimmende Identifikationsmerkmal bereits als "bekannt" vermerkt ist, dann stellt die Steuereinrichtung die diesem übereinstimmende Identifikationsmerkmal zugeordneten Kochinformationen über die Kommunikationsschnittstelle direkt zur Verfügung. Insbesondere kann der Vermerk in der Datenbank des Speichermediums der Steuereinrichtung hinterlegt sein. Alternativ oder zusätzlich kann der Vermerk in einer externen Datenbank hinterlegt sein. Vorzugsweise ist der Vermerk im Kontext eines digitalen Nutzerportals und in Zusammenhang mit einer Nutzeridentifikation gespeichert.

Dadurch werden Kochinformationen für ein bereits registriertes Zubehörteil schneller und mit weniger Aufwand seitens des Nutzers vorgeschlagen bzw. angezeigt.

Die Steuereinrichtung ist vorzugsweise dazu eingerichtet, zur Folge einer entsprechenden Nutzereingabe ein Zur-Verfügung-Stellen von Kochinformationen nach dem hier beschriebenen Ablauf einzustellen.

Gemäß einer ersten Ausführungsform der Küchenmaschine ist die Kommunikationsschnittstelle dazu eingerichtet, eine Nutzereingabe zu erfassen und an die Steuereinrichtung weiterzuleiten. Ferner ist die Steuereinrichtung dazu eingerichtet, mindestens eine durch die Nutzereingabe unter den zur Verfügung gestellten Kochinformationen ausgewählte Kochinformation als bevorzugte Kochinformation zu vermerken, und bei einer späteren, erneuten Übereinstimmung desselben Identifikationsmerkmals, die mindestens eine als bevorzugte Kochinformation vermerkte Kochinformation über die Kommunikationsschnittstelle gesondert zur Verfügung zu stellen.

So ist die Küchenmaschine in der Lage, zur Folge einer Nutzereingabe betreffend eine Kochinformation eine verkürzte Verbindung zwischen einem Identifikationsmerkmal und bevorzugten Kochinformationen zu erstellen und zu speichern, um diese bei einem späteren Wiedererkennen des entsprechenden Zubehörteils schneller zugänglich zu machen.

Eine Nutzereingabe kann insbesondere eine haptische, optische oder klangliche Interaktion mit der Kommunikationsschnittstelle sein. Ist zum Beispiel die Kommunikationsschnittstelle als Touchscreen bzw. berührungsempfindlicher Bildschirm ausgebildet, dann kann dieser eine Nutzereingabe in Form eines Berührens der Oberfläche des Bildschirms erfassen.

Die Steuereinrichtung vermerkt dann die durch die erfasste Nutzereingabe betroffene Kochinformation in Zusammenhang mit dem zugeordneten Identifikationsmerkmal in der Datenbank als "bevorzugt" bzw. speichert einen entsprechenden Vermerk für diese Kochinformation. Das Speichern eines Vermerks entsprechend einer Nutzereingabe erfolgt bevorzugt im Kontext eines Nutzerkontos. Dadurch kann eine optimale Anpassung an individuale Nutzervorlieben angeboten werden.

Ein Vermerk als "bevorzugt" im Sinne der vorliegenden Erfindung umfasst jede Art von maschinenlesbarem Hinweis, der eine Differenzierung vom vermerkten Datensatz zu weiteren, in derselben Datenbank gespeicherten Datensätzen ermöglicht. So kann ein derartiger Vermerk zum Beispiel eine Verknüpfung, ein Informationszusatz über ein Datum, eine Nutzeridentität oder ein Identifikationsmerkmal sein.

Die Steuereinrichtung stellt bei erneuter Übereinstimmung des erfassten Identifikationsmerkmals mit einem Identifikationsmerkmal aus der Datenbank, das heißt bei einem Wiedererkennen des Zubehörteils, die zuvor vermerkten Kochinformationen gesondert zur Verfügung. Mit "gesondert" ist eine hervorgehobene Wiedergabe gemeint, zum Beispiel in einer separat angezeigten Rubrik von bereits gekochten Gerichten, häufig ausgewählten Kochrezepten oder von Lieblingszubereitungsanweisungen. Auch gemeint ist ein verkürzter Zugang zu der betroffenen Kochinformation, zum Beispiel mit der Anzeige eines Shortcuts in einem digitalen Menü.

Gemäß einem weiteren Ausführungsbeispiel ist eine Positionserfassungseinrichtung vorgesehen und dazu eingerichtet, die Position des mindestens einen Zubehörteils in Bezug auf das Grundgerät und / oder in Bezug auf ein weiteres Zubehörteil zu erfassen und an die Steuereinrichtung weiterzuleiten. Außerdem ist die Steuereinrichtung dazu eingerichtet, Kochinformationen aus der Datenbank in Abhängigkeit von der erfassten Position des Zubehörteils über die Kommunikationsschnittstelle zur Verfügung zu stellen.

Somit erkennt die Steuereinrichtung automatisch, ob ein Zubehörteil eingesetzt ist und ob seine Position ein bestimmungemäßes Zusammenwirken mit dem Grundgerät erlaubt. Insbesondere kann eine Küchenmaschine in einer entsprechenden Ausführung das Einsetzen und das Entfernen eines Zubehörteils automatisch erkennen und bietet dann auch eine gesteigerte Benutzerfreundlichkeit.

Die Steuereinrichtung stellt Kochinformationen in Abhängigkeit von einer erkannten Position eines Zubehörteils zur Verfügung. Somit können zum Beispiel erst beim Erkennen eines Einsetzens eines Zubehörteils zutreffende Kochinformationen zur Verfügung gestellt werden. Dadurch wird vermieden, dass Kochinformationen für Zubehörteile, die zwar in der Umgebung des Grundgeräts und deren Identifikationsmerkmal durchaus durch die Erfassungseinrichtung erfasst werden können, jedoch nicht am Grundgerät eingesetzt werden sollen, zur Verfügung gestellt werden. Außerdem kann eine Zur-Verfügung-Stellung von Kochinformationen beendet werden, wenn ein Entfernen eines Zubehörteils vom Grundgerät erkannt wird. Somit werden Kochinformationen nur für tatsächlich am Grundgerät eingesetzte Zubehörteile zur Verfügung gestellt.

Die Positionserfassungseinrichtung kann im Zubehörteil und/oder im Gehäuse des Grundgeräts angeordnet sein. Vorzugsweise weist das Zubehörteil mindestens ein Element auf, das dazu eingerichtet ist, die Positionserfassungseinrichtung zu beeinflussen, und die Positionserfassungseinrichtung ist dazu eingerichtet, in Abhängigkeit von der Beeinflussung durch das Element ein Signal mit einer Positionsinformation auszugeben.

Insbesondere kann das Zusammenwirken des Elements des Zubehörteils mit der Positionserfassungseinrichtung wie folgt ausgestaltet sein:
- Öffnen oder Schließen eines elektrischen Kontakts zwischen dem Element am Zubehörteil und der Positionserfassungseinrichtung durch Positionsänderung des Zubehörteils relativ zum Grundgerät;
- Öffnen oder Schließen eines magnetischen Kontakts, zum Beispiel ein Reed-Kontakt, zwischen einem als Magnet ausgebildeten Element am Zubehörteil und der Positionserfassungseinrichtung durch Positionsänderung des Zubehörteils relativ zum Grundgerät;
- Erfassen einer durch Zusammenwirken eines Metallteils am Zubehörteil und eines aktiven Erfassungselements der Positionserfassungseinrichtung herbeigeführten Induktivitäts- oder Kapazitätsänderung; und / oder
- Erfassen der Intensität des Magnetfeldes eines am Zubehörteil angeordneten Magnets durch ein aktives Erfassungselement der Positionserfassungseinrichtung.

Vorzugsweise ist die Positionserfassungseinrichtung dazu eingerichtet, zu prüfen, ob ein Zubehörteil bestimmungsgemäß am Grundgerät eingesetzt ist bzw. ob dessen Position ein erfolgreiches Zusammenwirken des Grundgeräts mit dem Zubehörteil erlaubt. In diesem Kontext ist es vorteilhaft, wenn die Steuereinrichtung einen entsprechenden Nutzerhinweis über die Kommunikationsschnittstelle ausgeben kann.

Die Steuereinrichtung kann dazu eingerichtet sein, erst eine erfasste Position und dann ein erfasstes Identifikationsmerkmal zu verarbeiten. So sind die Erfolgsaussichten einer Identifikationsmerkmalerfassung gesteigert, denn es ist wahrscheinlicher, dass ein Datenträger mit einem Identifikationsmerkmal in einer für die Erfassungseinrichtung günstige Lage angeordnet ist, wenn bereits erkannt wurde, dass das Zubehörteil am Grundgerät richtig eingesetzt ist.

Die Position eines Zubehörteils kann in Bezug auf das Grundgerät erfasst werden. Sind mindestens zwei Zubehörteile vorgesehen, dann kann die Position eines zweiten Zubehörteils, zum Bespiel einer Schneideeinheit, in Bezug auf die Position eines ersten Zubehörteils, zum Beispiel eines Rührtopfs, erfasst werden. Insgesamt kann die Positionserfassungseinrichtung dazu geeignet sein, die Position von einem oder von mehreren Zubehörteilen zu erfassen und die Steuereinrichtung dazu eingerichtet sein, das Einsetzen oder Entfernen von einem oder von mehreren Zubehörteilen zusammen automatisch zu erkennen. Beispielsweise kann automatisch erkannt werden, ob ein Zubehörteil richtig in bzw. auf einem Kochgefäß eingesetzt ist, und auch ob das Kochgefäß wiederum richtig auf dem Grundgerät eingesetzt ist.

Die Steuereinrichtung kann Kochinformationen aus der Datenbank in Abhängigkeit von der erfassten Position des Zubehörteils auswählen. So ist die Küchenmaschine in der Lage, dem Nutzer eine Kochinformation in Abhängigkeit von einem erkannten Zubehörteil und von der aktuellen Position des Zubehörteils automatisch anzuzeigen.

Bei einer weiteren Ausführungsform der Küchenmaschine ist die Steuereinrichtung dazu eingerichtet, Kochinformationen aus der Datenbank in Abhängigkeit von mehreren erfassten Identifikationsmerkmalen und / oder erfassten Positionen zur Verfügung zu stellen.

Eine derartige Küchenmaschine kann Kochinformationen automatisch in Abhängigkeit sowohl vom Typ als auch von der Position mehrerer einzelner Zubehörteile zur Verfügung stellen. So kann die Nutzung mehrerer Zubehörteile gleichzeitig für den Nutzer vereinfacht und das Kocherlebnis entsprechend verbessert werden.

Insbesondere ist die Küchenmaschine in der Lage, einem Nutzer Kochinformationen automatisch zur Verfügung zu stellen, die für eine Zubereitung mithilfe aller erfassten Zubehörteile zutreffend ist. Alternativ kann eine Auswahl an Kochinformationen zur Verfügung gestellt werden, die für einzelne der erfassten Zubehörteile zutreffend sind, so dass der Nutzer dann selbst entscheiden kann, welche(s) Zubehörteil(e) er einsetzen möchte.

Eine weitere Ausführungsform der Küchenmaschine sieht vor, dass die Steuereinrichtung dazu eingerichtet ist, bei fehlender Übereinstimmung des erfassten Identifikationsmerkmals mit einem Identifikationsmerkmal aus der Datenbank, mindestens eine Zubereitungsfunktion zu sperren. Alternativ oder zusätzlich ist die Steuereinrichtung dazu eingerichtet, beim Erfassen der Position eines Zubehörteils, die einem Einsetzen des Zubehörteils am Grundgerät entspricht, und fehlgeschlagenem Erfassen eines Identifikationsmerkmals, mindestens eine Zubereitungsfunktion zu sperren.

So kann die Nutzung von Zubehörteilen fremder Anbieter in Zusammenhang mit der Küchenmaschine verhindert werden, selbst wenn diese ein durch die Erfassungseinrichtung lesbares Identifikationsmerkmal aufweisen. Insbesondere können Fremdanbieterzubehörteile trotzt Vorliegen eines durch die Positionserfassungseinrichtung kompatiblen Elements von der Nutzung mit der Küchenmaschine ausgeschlossen werden.

Identifikationsmerkmale, die von Fremdanbietern stammen, können gezielt in der Datenbank, auf die die Steuereinrichtung zurückgreift, fehlen. Alternativ kann ein von einem Fremdanbieter stammendes Identifikationsmerkmal mit einem Vermerk als "unzulässig" in der Datenbank hinterlegt sein und die Steuereinrichtung bei Übereinstimmung des erfassten Identifikationsmerkmal mit einem als "unzulässig" vermerkten Identifikationsmerkmal mindestens eine Zubereitungsfunktion sperren.

Eine Zubereitungsfunktion ist insbesondere jede Funktion der Küchenmaschine, die einen Zubereitungsschritt bewirkt. Beispielsweise kann die Steuereinrichtung den Betrieb des Elektromotors oder einen Heizkörper gezielt einstellen, um eine Zubereitungsfunktion im Sinne der Erfindung zu sperren.

Zusätzlich kann die Steuereinrichtung auch insbesondere über die Kommunikationsschnittstelle eine Meldung ausgeben, dass eine Zubereitungsfunktion aufgrund des Erfassens eines unzulässigen Identifikationsmerkmals bzw. fremden Zubehörteils gesperrt ist.

Die Küchenmaschine kann derart ausgebildet sein, dass das Identifikationsmerkmal ein kodierter Datenträger mit maschinenlesbaren Informationen ist, und dass die Erfassungseinrichtung zum Erfassen von maschinenlesbaren Informationen eingerichtet ist.

Der Datenträger kann insbesondere ein Kontrastbild aufweisen, vorzugsweise ein Barcode oder ein QR-Code. Dadurch lässt sich ein Zubehörteil einfach und kostengünstig mit einem Identifikationsmerkmal kennzeichnen. Außerdem sind Barcode oder QR-Code Leser auf dem Markt erhältlich und das Grundgerät lässt sich somit mit relativ wenig Aufwand ausstatten.

Als Datenträger kann ein elektronischer Chip, eine Platine mit Datenspeicher oder ähnlicher vorgesehen sein. Je nach Gestaltung des Datenträgers können die Komplexität der Kodierung und der Umfang an gespeicherten Informationen eingestellt werden, und so auch das Angebot an Zusatzfunktionen sowie die Einschränkung der Nutzung von Fremdanbieterzubehörteilen.

Gemäß einer besonderen Ausführungsform der Küchenmaschine ist das Identifikationsmerkmal auf einem elektronischen Datenträger gespeichert und die Erfassungseinrichtung ist eine Leseeinrichtung für den elektronischen Datenträger, wobei der Datenträger und die Leseeinrichtung bidirektional per Kabel verbunden sind, insbesondere über eine Bus-Verbindung. Alternativ ist das Identifikationsmerkmal auf einem elektronischen Datenträger gespeichert und die Erfassungseinrichtung ist eine Leseeinrichtung für den elektronischen Datenträger, wobei die Leseeinrichtung für ein Erfassen des Inhalts des elektronischen Datenträgers mittels eines Funkstandards eingerichtet ist, insbesondere mittels Radio-Frequency Identification (RFID), Bluetooth (BT) bzw. Bluetooth Low Energy (BLE), WLAN oder Ultra-Wide-Band (UWB).

Demnach ist die Erfassungseinrichtung mit dem ein Identifikationsmerkmal aufweisenden Datenträger kabelverbunden, zum Beispiel über ein Stecker-Steckdose Prinzip, oder die Erfassungseinrichtung liest das Identifikationsmerkmal vom Datenträger kontaktlos.

Durch eine Kabelverbindung kann die Küchenmaschine bzw. die Steuereinrichtung ein Zubehörteil mit gesteigerter Sicherheit erkennen und ist in der Herstellung verhältnismäßig kostengünstig. Ein drahtloses Erfassen hat den Vorteil, relativ schmutzunempfindlich zu sein, was beim Einsatz der Küchenmaschine zusammen mit Lebensmitteln von Vorteil ist. Außerdem ermöglicht ein drahtloses Erfassen eine größere Bewegungsfreiheit des Zubehörteils relativ zur Erfassungseinrichtung am Grundgerät.

Die oben genannte Aufgabe wird erfindungsgemäß auch mit einem Zubehörteil für eine Küchenmaschine mit einem Grundkörper dadurch gelöst, dass ein Datenträger mit einem Identifikationsmerkmal vorgesehen ist, wobei das Identifikationsmerkmal mindestens eine maschinenlesbare Information betreffend den Typ und / oder eine Identifikationsnummer des Zubehörteils ist, und dass der Datenträger im Grundkörper integriert ist.

Der Datenträger ist im Grundkörper des Zubehörteils integriert und kann insbesondere innerhalb eines Hohlraums des Grundkörpers oder in einer Wandung des Grundkörpers angeordnet sein. Auf diese Weise ist der Datenträger vom Schmutz und Lebensmittel geschützt und beeinträchtigt nicht das Aussehen des Zubehörteils. Auch das Nachbilden des Zubehörteils ist dadurch erschwert, denn der Datenträger ist schwieriger zugänglich.

Das Zubehörteil kann für ein Zusammenwirken mit mehreren Grundgeräten und / oder kompatibel mit weiteren Zubehörteilen ausgebildet und somit vielseitig einsetzbar sein.

Die oben genannte Aufgabe ist ferner mittels eines erfindungsgemäßen Systems mit einer Küchenmaschine nach einer der oben beschriebenen Ausführungsformen und mit einer Datenbank, wobei die Datenbank Identifikationsmerkmale und dazu zugeordnete Kochinformationen aufweist, dadurch gelöst, dass die Steuereinrichtung für eine Verbindung mit der Datenbank über ein übergreifendes Kommunikationsnetz eingerichtet ist.

Dieses System bietet einem Küchenmaschinennutzer eine breite Palette an Zubereitungsoptionen und Zusatzdienstleistungen, die durch den Anbieter der Küchenmaschine über die Datenbank aktualisiert, angepasst und nach Belieben freigeschaltet werden können.

Das übergreifende Kommunikationsnetz umfasst vorzugsweise eine Internet-Verbindung und die Datenbank ist auf einem Server für ein Nutzerportal hinterlegt. Vorzugsweise ist die Datenbank eine in Bezug auf das Grundgerät externe Datenbank.

Die oben genannte Aufgabe ist auch durch ein Verfahren zum Betreiben einer Küchenmaschine, insbesondere einer Küchenmaschine nach einer der beschriebenen Ausführungsformen gelöst,
- bei dem ein Identifikationsmerkmal eines Zubehörteils für eine Küchenmaschine erfasst wird,
- bei dem das erfasste Identifikationsmerkmal mit Identifikationsmerkmalen aus einer Datenbank verglichen wird,
- bei dem bei Übereinstimmung des erfassten Identifikationsmerkmals mit einem unvermerkten Identifikationsmerkmal aus der Datenbank
   ▪ das übereinstimmende Identifikationsmerkmal aus der Datenbank als bekannt vermerkt wird und
   ▪ Kochinformationen, die dem übereinstimmenden Identifikationsmerkmal aus der Datenbank zugeordnet sind, zur Verfügung gestellt werden,
   und
- bei dem bei Übereinstimmung des erfassten Identifikationsmerkmals mit einem bereits als bekannt vermerkten Identifikationsmerkmal aus der Datenbank
   ▪ mindestens eine dem als bekannt vermerkten Identifikationsmerkmal zugeordnete Kochinformation zur Verfügung gestellt wird.

Gemäß einem ersten Ausführungsbeispiel des Verfahrens wird eine Nutzereingabe erfasst, mindestens eine durch die Nutzereingabe unter den zur Verfügung gestellten Kochinformationen ausgewählte Kochinformation wird als bevorzugte Kochinformation vermerkt, und bei einer späteren, erneuten Übereinstimmung desselben Identifikationsmerkmals wird die mindestens eine als bevorzugte Kochinformation vermerkte Kochinformation gesondert zur Verfügung gestellt.

Ein weiteres Ausführungsbeispiel des Verfahrens sieht vor, dass die Position mindestens eines Zubehörteils in Bezug auf das Grundgerät und / oder in Bezug auf ein weiteres Zubehörteil erfasst wird, und dass Kochinformationen aus der Datenbank in Abhängigkeit von der erfassten Position des Zubehörteils zur Verfügung gestellt werden.

Im Rahmen eines weiteren Ausführungsbeispiels des Verfahrens werden Kochinformationen aus der Datenbank in Abhängigkeit von mehreren erfassten Identifikationsmerkmalen und /oder erfassten Positionen zur Verfügung gestellt.

Gemäß einem weiteren Ausführungsbeispiel des Verfahrens wird bei fehlender Übereinstimmung des erfassten Identifikationsmerkmals mit einem Identifikationsmerkmal aus der Datenbank mindestens eine Zubereitungsfunktion gesperrt. Alternativ oder zusätzlich wird beim Erfassen der Position eines Zubehörteils, die einem Einsetzen des Zubehörteils am Grundgerät entspricht, und fehlgeschlagenem Erfassen eines Identifikationsmerkmals mindestens eine Zubereitungsfunktion gesperrt.

Das erfindungsgemäße Verfahren und dessen Ausführungsbeispiele haben die gleichen Vorteile als die erfindungsgemäße Küchenmaschine und ihre Ausführungsformen.

Ferner ist die oben genannte Aufgabe durch ein Computerprogramm aufweisend Befehle gelöst, deren Ausführung auf mindestens einem Prozessor einer Steuereinrichtung einer Küchenmaschine nach einer der oben beschriebenen Ausführungsformen die Durchführung eines Verfahrens gemäß einem oben erläuterten Ausführungsbeispiel bewirkt.

Weitere Merkmale und Vorteile der vorliegenden Erfindung ergeben sich aus der nachfolgenden Beschreibung von Ausführungsbeispielen, wobei auf die beigefügte Zeichnung Bezug genommen wird.

In der Zeichnung zeigen
- Fig. 1: ein erstes Ausführungsbeispiel einer Küchenmaschine,
- Fig. 2: ein Ausführungsbeispiel des Systems,
- Fig. 3: ein weiteres Ausführungsbeispiel der Küchenmaschine,
- Fig. 4: ein Ausführungsbeispiel des Zubehörteils.

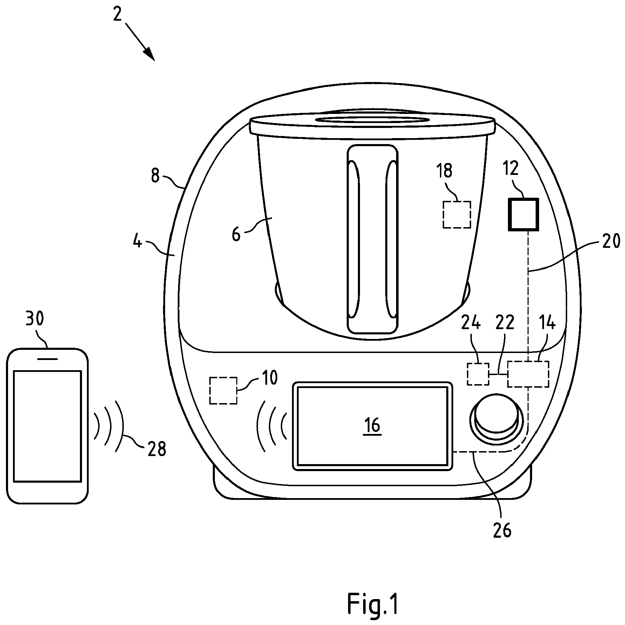

Fig. 1 zeigt eine Küchenmaschine 2 mit einem Grundgerät 4 und mit einem Zubehörteil 6. Das Grundgerät 4 weist ein Gehäuse 8, einen Elektromotor 10, eine Erfassungseinrichtung 12, eine Steuereinrichtung 14 und eine Kommunikationsschnittstelle 16 auf. Das Zubehörteil 6 ist ein Kochgefäß, an dem ein Datenträger 18 in Form eines RFID-Moduls mit einem Speicher und einer Antenne vorgesehen ist.

Auf dem Speicher sind maschinenlesbare Informationen betreffend ein Identifikationsmerkmal des Zubehörteils 6 gespeichert. Das Identifikationsmerkmal umfasst den Typ des Zubehörteils 6, hier "Kochgefäß" und die Herstelleridentifikationsnummer des Zubehörteils 6, hier "111". Die Erfassungseinrichtung 12 ist ein Lesegerät zum Erfassen vom auf dem Speicher des RFID-Moduls gespeicherten Identifikationsmerkmal.

Die Erfassungseinrichtung 12 ist über eine erste Kommunikationsverbindung 20 mit der Steuereinrichtung 14 verbunden. Die Steuereinrichtung 14 ist wiederum über eine zweite Kommunikationsverbindung 22 mit einer Datenbank 24 für Identifikationsmerkmale und hierzu zugeordnete Kochinformationen und über eine dritte Kommunikationsverbindung 26 mit der Kommunikationsschnittstelle 16 verbunden. Die Kommunikationsschnittstelle 16 ist für eine drahtlose Datenübertragung 28 mit einer Benutzerschnittstelle 30 in Form eines Smartphones eingerichtet.

Die Steuereinrichtung 14 weist einen Prozessor (hier nicht dargestellt) mit einem Computerprogramm auf. Das Computerprogramm umfasst Befehle, deren Ausführung auf dem Prozessor die Durchführung eines Verfahrens in Abhängigkeit von ausgewählten Kochinformationen aus der Datenbank 24 bewirkt.

Die Küchenmaschine 2 wird wie folgt betrieben. Beim ersten Einsatz des Zubehörteils 6 mit dem Grundgerät 4 erfasst die Erfassungseinrichtung 12 das Identifikationsmerkmal des Zubehörteils 6 und gibt ein Signal an die Steuereinrichtung 14 aus, das den Informationen "Kochgefäß" und "111" entspricht.

Die Steuereinrichtung 14 vergleicht diese Informationen mit Identifikationsmerkmalen aus der Datenbank 24. Der Vergleich ergibt eine Übereinstimmung der erfassten Information "Kochgefäß" mit einer in der Datenbank 24 hinterlegten Information "Kochgefäß", die noch nicht vermerkt ist. Die Steuereinrichtung 14 vermerkt die Information "Kochgefäß" aus der Datenbank 24 mit "111" bzw. speichert die Herstelleridentifikationsnummer "111" des eingesetzten Zubehörteils 6 zusammen mit der übereinstimmenden Information "Kochgefäß" in der Datenbank 24.

Dann überträgt die Steuereinrichtung 14 Kochinformationen, die in der Datenbank 24 zusammen mit "Kochgefäß" gespeichert sind, an die Nutzerschnittstelle über die Kommunikationsschnittstelle 16.

Die Nutzerschnittstelle erfasst eine Nutzereingabe betreffend eine Auswahl eines Kochrezepts und leitet eine entsprechende Auswahlinformation an die Steuereinrichtung 14 weiter. Die Steuereinrichtung 14 vermerkt die ausgewählte Kochinformation in der Datenbank 24, indem eine Verknüpfung zwischen dem Zubehörteil 6 "Kochgefäß" mit der Herstelleridentifikationsnummer "111" und der Kochinformation hinterlegt wird. Daneben veranlasst die Steuereinrichtung 14 die Funktionselemente der Küchenmaschine 2, Zubereitungsschritte entsprechend der ausgewählten Kochinformationen durchzuführen.

Bei einem erneuten Einsatz des Zubehörteils 6 am Grundgerät 4 vergleicht die Steuereinrichtung 14 das durch die Erfassungseinrichtung 12 erfasste Identifikationsmerkmal mit den in der Datenbank 24 hinterlegten Informationen. Der Vergleich ergibt eine Übereinstimmung sowohl der Information "Kochgefäß" als auch der Information "111". So wird das Zubehörteil 6 wiedererkannt und die Steuereinrichtung 14 stellt dann die zuvor durch Nutzereingabe ausgewählten, verknüpften Kochinformationen in einem gesonderten Menü auf der Benutzerschnittstelle 30 über die Kommunikationsschnittstelle 16 zur Verfügung.

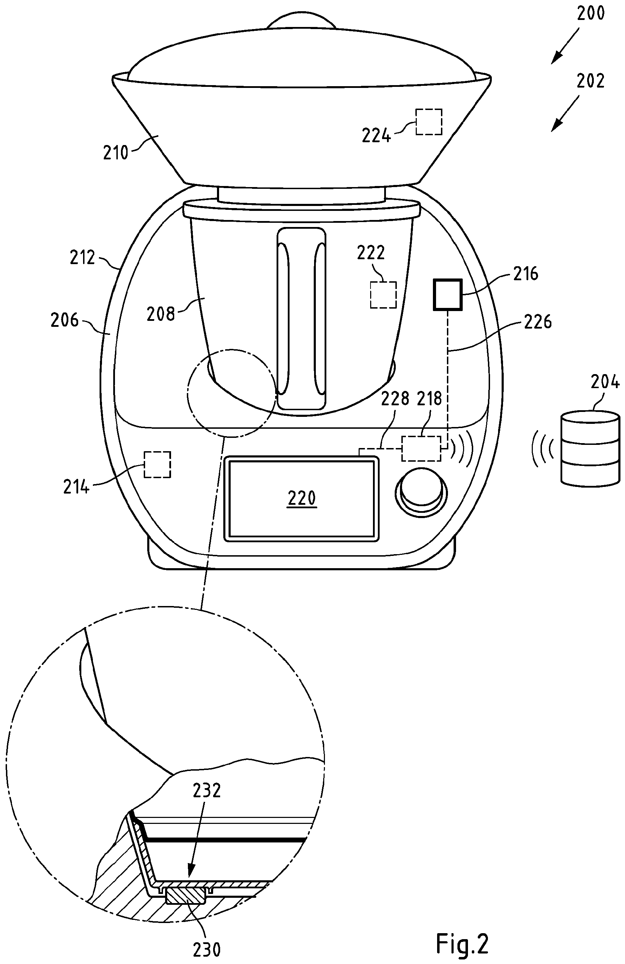

Fig. 2 zeigt ein System 200 mit einer Küchenmaschine 202 und mit einer Datenbank 204. Die Küchenmaschine 202 ist mit einem Grundgerät 206, mit einem ersten Zubehörteil 208 und mit einem zweiten Zubehörteil 210 ausgestattet. Auch hier weist das Grundgerät 206 ein Gehäuse 212, einen Elektromotor 214, eine Erfassungseinrichtung 216, eine Steuereinrichtung 218 und eine Kommunikationsschnittstelle 220 auf.

Das erste Zubehörteil 208 und das zweite Zubehörteil 210 sind jeweils als Gefäß mit einer Schneideeinheit und als Gareinheit ausgebildet. Das erste Zubehörteil 208 dient als Schnittstelle für den Einsatz des zweiten Zubehörteils 210 mit dem Grundgerät 206. Die Zubehörteile 208, 210 weisen jeweils einen Datenträger 222, 224 mit einem Identifikationsmerkmal auf.

Die Erfassungseinrichtung 216 ist dazu eingerichtet, die Identifikationsmerkmale über Bluetooth-Übertragung zu erfassen und die Kommunikationsschnittstelle 220 ist ein berührungsempfindlicher Bildschirm. Die Erfassungseinrichtung 216 ist über eine erste Kommunikationsverbindung 226 mit der Steuereinrichtung 218 verbunden, die wiederum über eine zweite Kommunikationsverbindung 228 mit der Kommunikationsschnittstelle 220 verbunden ist. Die Steuereinrichtung 218 ist über Funk und Internet mit einer externen Datenbank 204 für Identifikationsmerkmale und hierzu zugeordnete Kochinformationen verbunden.

Am Grundgerät 206 ist eine Positionserfassungseinrichtung 230 angeordnet. Das erste Zubehörteil 208 weist ein Element 232 auf, das beim Einsetzen des ersten Zubehörteils 208 am Grundgerät 206 einen elektrischen Kreis der Positionserfassungseinrichtung 230 schließt.

Die Küchenmaschine 202 ist so in der Lage, folgende Verfahrensschritte auszuführen.

Der Nutzer meldet sich auf einem Nutzerportal an, das einen Zugriff auf die externe Datenbank 204 erlaubt. Dann setzt er das erste Zubehörteil 208 am Grundgerät 206 ein, wobei am ersten Zubehörteil 208 das zweite Zubehörteil 210 bereits angeordnet ist. Das Element 232 am ersten Zubehörteil 208 wirkt mit der Positionserfassungseinrichtung 230 derart zusammen, dass ein elektrischer Kreis der Positionserfassungseinrichtung 230 geschlossen wird und die Positionserfassungseinrichtung 230 ein entsprechendes Signal an die Steuereinrichtung 218 ausgibt. Die Steuereinrichtung 218 stellt ein korrektes Einsetzen des ersten Zubehörteils 208 am Grundgerät 206 fest und veranlasst, die Erfassungseinrichtung 216 einen Erfassungsvorgang zu starten.

Die Erfassungseinrichtung 216 erfasst das erste Identifikationsmerkmal "Gefäß mit Schneideinheit; Herstelleridentifikationsnummer 222" und das zweite Identifikationsmerkmal "Gareinheit; Herstelleridentifikationsnummer XYX" und leitet diese an die Steuereinrichtung 218 weiter. Die Steuereinrichtung 218 führt einen Vergleich der erfassten Identifikationsmerkmale mit den in der Datenbank 204 hinterlegten Identifikationsmerkmalen durch. Dabei ergibt sich eine Übereinstimmung mit "Gefäß mit Schneideinheit; Herstelleridentifikationsnummer 222". Das erfasste zweite Identifikationsmerkmal stimmt allerdings nur teilweise überein, also nur den Teil "Gareinheit", mit den in der Datenbank 204 hinterlegten Daten. Die Herstelleridentifikationsnummer und ihr Format werden beim Vergleich nicht erkannt bzw. das zweite Zubehörteil 210 wird als nicht zulässig eingestuft.

Demzufolge stellt die Steuereinrichtung 218 die mit dem ersten Identifikationsmerkmal verknüpften Kochinformationen über die Kommunikationsschnittstelle 220 zur Verfügung und gibt ein Signal aus, dass auf das Erfassen eines unzulässigen Zubehörteils hinweist.

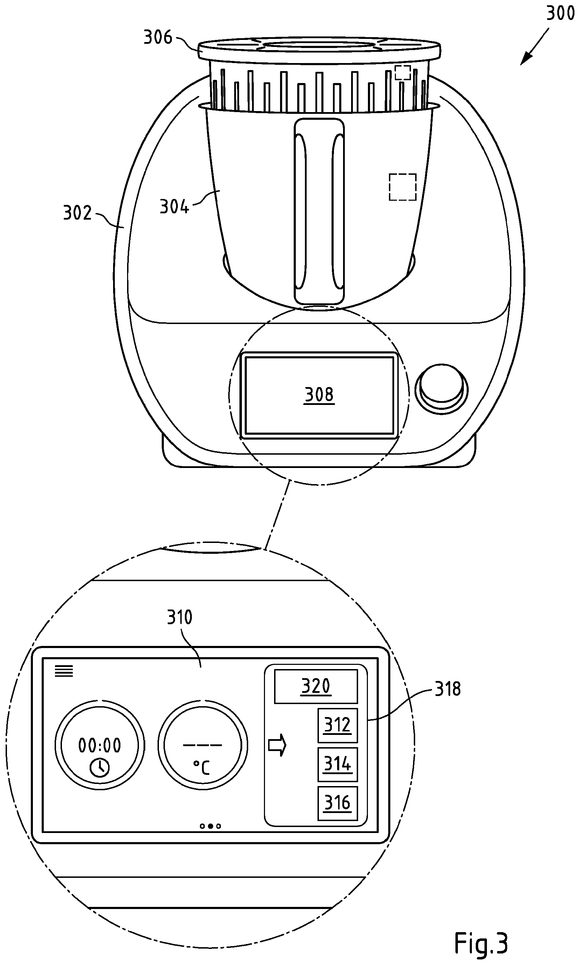

Fig. 3 zeigt ein Ausführungsbeispiel der Küchenmaschine 300, bei dem am Grundgerät 302 ein Kochgefäß als erstes Zubehörteil 304 und ein Garkorb als zweites Zubehörteil 306 angesetzt sind. Die Kommunikationsschnittstelle 308 ist als berührungsempfindlicher Bildschirm ausgebildet. Auch gezeigt ist ein Beispiel für eine Menüansicht 310, die dem Nutzer nach dem Einsetzen der Zubehörteile 304, 306 und Erfassen bzw. Analyse deren jeweiligen Identifikationsmerkmale zur Verfügung gestellt bekommt. Hier sind die angezeigten Kochinformationen Zubereitungsanweisungen 312, 314, 316, die der Nutzer bei einem früheren Einsatz der Zubehörteilkombination des Kochgefäßes mit dem Garkorb ausgewählt und auch durchgeführt hat, und die durch die Steuereinrichtung in der Datenbank entsprechend hinterlegt wurden. Die Zubereitungsanweisungen 312, 314, 316 sind durch Anzeige als Rubrik 318 mit dem Titel 320 "bereits gekocht mit dem Garkorb und dem Kochgefäß" gesondert zur Verfügung gestellt.

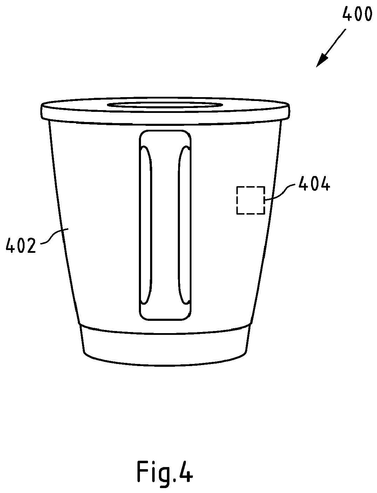

Fig. 4 zeigt ein Ausführungsbeispiel des Zubehörteils 400 mit einem Grundkörper 402 und einem Datenträger 404. Der Datenträger 404 ist im Grundkörper 402 integriert. Auf dem Datenträger 404 ist ein Identifikationsmerkmal gespeichert, das eine maschinenlesbare Information über den Typ des Zubehörteils 400 ist, hier "Kochgefäß".

## Patentansprüche

1. Küchenmaschine (2, 202, 300)
- mit einem ein Gehäuse (8, 212), einen Elektromotor (10, 214), eine Erfassungseinrichtung (12, 216), eine Steuereinrichtung (14, 218) und eine Kommunikationsschnittstelle (16, 220, 308) aufweisenden Grundgerät (4, 206, 302) und
- mit mindestens einem ein Identifikationsmerkmal aufweisenden Zubehörteil (6, 208, 210, 304, 306, 400),
**dadurch gekennzeichnet,**
- **dass** die Erfassungseinrichtung (12, 216) dazu eingerichtet ist, das Identifikationsmerkmal des mindestens einen Zubehörteils (6, 208, 210, 304, 306, 400) zu erfassen und an die Steuereinrichtung (14, 218) weiterzuleiten,
- **dass** die Steuereinrichtung (14, 218) dazu eingerichtet ist, das erfasste Identifikationsmerkmal mit Identifikationsmerkmalen aus einer Datenbank (24, 204) zu vergleichen,
- **dass** die Steuereinrichtung (14, 218) dazu eingerichtet ist, bei Übereinstimmung des erfassten Identifikationsmerkmals mit einem unvermerkten Identifikationsmerkmal aus der Datenbank (24, 204)
- das übereinstimmende Identifikationsmerkmal aus der Datenbank (24, 204) als bekannt zu vermerken, und
- Kochinformationen, die dem übereinstimmenden Identifikationsmerkmal aus der Datenbank (24, 204) zugeordnet sind, über die Kommunikationsschnittstelle (16, 220, 308) zur Verfügung zu stellen,
und
- **dass** die Steuereinrichtung (14, 218) dazu eingerichtet ist, bei Übereinstimmung des erfassten Identifikationsmerkmals mit einem bereits als bekannt vermerkten Identifikationsmerkmal aus der Datenbank (24, 204) mindestens eine dem als bekannt vermerkten Identifikationsmerkmal zugeordnete Kochinformation über die Kommunikationsschnittstelle (16, 220, 308) zur Verfügung zu stellen.

2. Küchenmaschine (2, 202, 300) nach Anspruch 1,
**dadurch gekennzeichnet,**
- **dass** die Kommunikationsschnittstelle (16, 220, 308) dazu eingerichtet ist, eine Nutzereingabe zu erfassen und an die Steuereinrichtung (14, 218) weiterzuleiten, und
- **dass** die Steuereinrichtung (14, 218) dazu eingerichtet ist,
- mindestens eine durch die Nutzereingabe unter den zur Verfügung gestellten Kochinformationen ausgewählte Kochinformation als bevorzugte Kochinformation zu vermerken, und
- bei einer späteren, erneuten Übereinstimmung desselben Identifikationsmerkmals die mindestens eine als bevorzugte Kochinformation vermerkte Kochinformation über die Kommunikationsschnittstelle (16, 220, 308) gesondert zur Verfügung zu stellen.

3. Küchenmaschine (2, 202, 300) nach dem Anspruch 1 oder 2,
**dadurch gekennzeichnet,**
- **dass** eine Positionserfassungseinrichtung (230) vorgesehen und dazu eingerichtet ist, die Position des mindestens einen Zubehörteils (6, 208, 210, 304, 306, 400) in Bezug auf das Grundgerät (4, 206, 302) und / oder in Bezug auf ein weiteres Zubehörteil (6, 208, 210, 304, 306, 400) zu erfassen und an die Steuereinrichtung (14, 218) weiterzuleiten, und
- **dass** die Steuereinrichtung (14, 218) dazu eingerichtet ist, Kochinformationen aus der Datenbank (24, 204) in Abhängigkeit von der erfassten Position des Zubehörteils (6, 208, 210, 304, 306, 400) über die Kommunikationsschnittstelle (16, 220, 308) zur Verfügung zu stellen.

4. Küchenmaschine (2, 202, 300) nach einem der Ansprüche 1 bis 3,
**dadurch gekennzeichnet,**
**dass** die Steuereinrichtung (14, 218) dazu eingerichtet ist, Kochinformationen aus der Datenbank (24, 204) in Abhängigkeit von mehreren erfassten Identifikationsmerkmalen und /oder erfassten Positionen zur Verfügung zu stellen.

5. Küchenmaschine (2, 202, 300) nach einem der Ansprüche 1 bis 4,
**dadurch gekennzeichnet,**
- **dass** die Steuereinrichtung (14, 218) dazu eingerichtet ist, bei fehlender Übereinstimmung des erfassten Identifikationsmerkmals mit einem Identifikationsmerkmal aus der Datenbank (24, 204), mindestens eine Zubereitungsfunktion zu sperren,
und / oder
- **dass** die Steuereinrichtung (14, 218) dazu eingerichtet ist, beim Erfassen der Position eines Zubehörteils (6, 208, 210, 304, 306, 400), die einem Einsetzen des Zubehörteils (6, 208, 210, 304, 306, 400) am Grundgerät (4, 206, 302) entspricht, und bei fehlgeschlagenem Erfassen eines Identifikationsmerkmals mindestens eine Zubereitungsfunktion zu sperren.

6. Küchenmaschine (2, 202, 300) nach einem der Ansprüche 1 bis 5,
**dadurch gekennzeichnet,**
- **dass** das Identifikationsmerkmal ein kodierter Datenträger (222, 224, 404) mit maschinenlesbaren Informationen ist, und
- **dass** die Erfassungseinrichtung (12, 216) zum Erfassen von maschinenlesbaren Informationen eingerichtet ist.

7. Küchenmaschine (2, 202, 300) nach Anspruch 6,
**dadurch gekennzeichnet,**
- **dass** das Identifikationsmerkmal auf einem elektronischen Datenträger gespeichert ist und die Erfassungseinrichtung eine Leseeinrichtung für den elektronischen Datenträger ist, wobei der Datenträger und die Leseeinrichtung bidirektional per Kabel verbunden sind, insbesondere über eine Bus-Verbindung, oder
- **dass** das Identifikationsmerkmal auf einem elektronischen Datenträger (222, 224, 404) gespeichert ist und die Erfassungseinrichtung (12, 216) eine Leseeinrichtung für den elektronischen Datenträger (222, 224, 404) ist, wobei die Leseeinrichtung für ein Erfassen des Inhalts des elektronischen Datenträgers (222, 224, 404) mittels eines Funkstandards eingerichtet ist, insbesondere mittels Radio-Frequency Identification (RFID), Bluetooth (BT), Bluetooth Low Energy (BLE), WLAN oder Ultra-Wide-Band (UWB).

8. Zubehörteil (6, 208, 210, 304, 306, 400) für eine Küchenmaschine (2, 202, 300), insbesondere für eine Küchenmaschine (2, 202, 300) nach einem der Ansprüche 1 bis 7,
- mit einem Grundkörper (402),
**dadurch gekennzeichnet,**
- **dass** ein Datenträger (222, 224, 404) mit einem Identifikationsmerkmal vorgesehen ist, wobei das Identifikationsmerkmal mindestens eine maschinenlesbare Information betreffend den Typ und / oder eine Identifikationsnummer des Zubehörteils (6, 208, 210, 304, 306, 400) ist, und
- **dass** der Datenträger (222, 224, 404) im Grundkörper (402) integriert ist.

9. System (200)
- mit einer Küchenmaschine (2, 202, 300) nach einem der Ansprüche 1 bis 7 und
- mit einer Datenbank (204),
- wobei die Datenbank (204) Identifikationsmerkmale und dazu zugeordnete Kochinformationen aufweist,
**dadurch gekennzeichnet,**
- **dass** die Steuereinrichtung (14, 218) für eine Verbindung mit der Datenbank 204) über ein übergreifendes Kommunikationsnetz eingerichtet ist.

10. Verfahren zum Betreiben einer Küchenmaschine (2, 202, 300), insbesondere einer Küchenmaschine (2, 202, 300) nach einem der Ansprüche 1 bis 7,
- bei dem ein Identifikationsmerkmal eines Zubehörteils (6, 208, 210, 304, 306, 400) für eine Küchenmaschine (2, 202, 300) erfasst wird,
- bei dem das erfasste Identifikationsmerkmal mit Identifikationsmerkmalen aus einer Datenbank (24, 204) verglichen wird,
- bei dem bei Übereinstimmung des erfassten Identifikationsmerkmals mit einem unvermerkten Identifikationsmerkmal aus der Datenbank (24, 204)
▪ das übereinstimmende Identifikationsmerkmal aus der Datenbank (24, 204) als bekannt vermerkt wird und
▪ Kochinformationen, die dem übereinstimmenden Identifikationsmerkmal aus der Datenbank (24, 204) zugeordnet sind, zur Verfügung gestellt werden,
und
- bei dem bei Übereinstimmung des erfassten Identifikationsmerkmals mit einem bereits als bekannt vermerkten Identifikationsmerkmal aus der Datenbank (24, 204)
o mindestens eine dem als bekannt vermerkten Identifikationsmerkmal zugeordnete Kochinformation zur Verfügung gestellt wird.

11. Verfahren nach Anspruch 10,
- bei dem eine Nutzereingabe erfasst wird,
- bei dem mindestens eine durch die Nutzereingabe unter den zur Verfügung gestellten Kochinformationen ausgewählte Kochinformation als bevorzugte Kochinformation vermerkt wird, und
- bei dem bei einer späteren, erneuten Übereinstimmung desselben Identifikationsmerkmals, die mindestens eine als bevorzugte Kochinformation vermerkte Kochinformation gesondert zur Verfügung gestellt wird.

12. Verfahren nach Anspruch 10 oder 11,
- bei dem die Position mindestens eines Zubehörteils (6, 208, 210, 304, 306, 400) in Bezug auf das Grundgerät (4, 206, 302) und / oder in Bezug auf ein weiteres Zubehörteil (6, 208, 210, 304, 306, 400) erfasst wird, und
- bei dem Kochinformationen aus der Datenbank (24, 204) in Abhängigkeit von der erfassten Position des Zubehörteils (6, 208, 210, 304, 306, 400) zur Verfügung gestellt werden.

13. Verfahren nach einem der Ansprüche 10 bis 12,
- bei dem Kochinformationen aus der Datenbank (24, 204) in Abhängigkeit von mehreren erfassten Identifikationsmerkmalen und /oder erfassten Positionen zur Verfügung gestellt werden.

14. Verfahren nach einem der Ansprüche 10 bis 13,
- bei dem
- bei fehlender Übereinstimmung des erfassten Identifikationsmerkmals mit einem Identifikationsmerkmal aus der Datenbank (24, 204) mindestens eine Zubereitungsfunktion gesperrt wird,
und / oder
- beim Erfassen der Position eines Zubehörteils (6, 208, 210, 304, 306, 400), die einem Einsetzen des Zubehörteils (6, 208, 210, 304, 306, 400) am Grundgerät (4, 206, 302) entspricht, und fehlgeschlagenem Erfassen eines Identifikationsmerkmals mindestens eine Zubereitungsfunktion gesperrt wird.

15. Computerprogramm aufweisend Befehle, deren Ausführung auf mindestens einem Prozessor einer Steuereinrichtung (14, 218) einer Küchenmaschine (2, 202, 300) nach einem der Ansprüche 1 bis 7 die Durchführung eines Verfahrens nach einem der Ansprüche 10 bis 14 bewirkt.
